# EUROPEAN PATENT APPLICATION

(11) **EP 3 734 324 A1**
(43) Date of publication of application: **04.11.2020**
(21) Application number: 18896077.7
(22) Date of filing: 20.12.2018
(51) Int. Cl.: G01S 7/40

(54) **ON-BOARD RADAR CALIBRATION APPARATUS AND METHOD**

(30) Priority: 25.12.2017 CN 201711423290
(71) Applicant: AUTEL INTELLIGENT TECHNOLOGY CORP., LTD., Shenzhen, Guangdong 518055 (CN)
(72) Inventor: TANG, Xinguang, Shenzhen, Guangdong 518055 (CN); SHEN, Zhiqin, Shenzhen, Guangdong 518055 (CN); CHEN, Jin, Shenzhen, Guangdong 518055 (CN)
(74) Representative: Gulde & Partner
(86) International application number: PCT/CN2018/122382
(87) International publication number: WO 2019/128842

(57) **Abstract**

The present invention relates to the technical field of automobile maintenance and device calibration, and discloses an on-board radar calibration device and method. The on-board radar calibration device includes a radar calibration plate, a radar calibration laser and a radar calibration reflector. The radar calibration plate includes a through hole. The radar calibration laser is configured to: after calibration of a vertical plane of the radar calibration plate is completed, emit a laser beam to pass through the through hole. The radar calibration reflector is mounted on an on-board radar of a to-be-calibrated automobile to reflect the laser beam passing through the through hole, so that the reflected laser beam is returned to the through hole along an original path to calibrate the on-board radar. In the present invention, the radar calibration reflector may be mounted on on-board radars of different automobile models. After the calibration of the vertical plane of the radar calibration plate is completed, the laser beam emitted by the radar calibration laser passes through the through hole, and the radar calibration reflector reflects the laser beam passing through the through hole to the through hole. In this way, the on-board radars of different automobile models can be calibrated, thereby facilitating the calibration of the on-board radars.

## Description

The present application claims priority to Chinese Patent Application No. 201711423290.0, filed with the Chinese Patent Office on December 25, 2017 and entitled "ON-BOARD RADAR CALIBRATION DEVICE AND METHOD", which is incorporated herein by reference in its entirety.

### BACKGROUND

### Technical Field

The present application relates to the technical field of automobile maintenance and device calibration, and in particular, to an on-board radar calibration device and method

### Related Art

In the field of advanced driver assistant systems (ADAS), an adaptive cruise control (ACC) system is a commonly used auxiliary function. A specific working principle of the ACC system is that a distance between an automobile and a preceding automobile is measured in real time by using an on-board radar, a speed of the automobile is compared with that of the preceding automobile, and power systems such as an accelerator and a brake of the automobile are controlled, so that the automobile always maintains a constant safety distance from the preceding vehicle. Therefore, the on-board radar is crucial in implementation of an ACC function. In addition to measurement performance of the radar, accuracy and precession of data finally measured by the on-board radar depend on a mounting position and a mounting angle of the on-board radar. The mounting position and the mounting angle may change due to uncontrollable factors such as vibration and collision caused of the automobile. Therefore, in the field of automobile maintenance and device calibration, especially in calibration of the ACC function, calibration of the on-board radar is the core. At present, on-board radar calibration is mostly post-mounting calibration, that is, after an automobile is delivered to a user for a period of time, an on-board radar needs to be calibrated for objective reasons.

During implementation of the present invention, the inventor finds that a calibration tool is used for a single automobile model in most existing calibration, that is, one calibration tool can calibrate only an on-board radar of a single automobile model. In addition, in the calibration method, calculation of an offset angle relies too much on software, and can be completed by performing calibration many times, which is cumbersome in use.

### SUMMARY

In order to resolve the foregoing technical problem, embodiments of the present invention provide an on-board radar calibration device and method for facilitating a calibration operation.

The embodiments of the present invention adopt the following technical solution to resolve the technical problem.

An on-board radar calibration device is provided, including:
a radar calibration plate including a through hole;
a radar calibration laser configured to: after calibration of a vertical plane of the radar calibration plate is completed, emit a laser beam to pass through the through hole; and
a radar calibration reflector mounted on an on-board radar of a to-be-calibrated automobile to reflect the laser beam passing through the through hole, so that the reflected laser beam is returned to the through hole along an original path to calibrate the on-board radar.

Optionally, the on-board radar calibration device includes:
a laser configured to emit a laser beam to the radar calibration plate; and
a stop configured to control the laser beam emitted by the laser to pass through the stop, the radar calibration plate being configured to reflect the laser beam passing through the stop to return the reflected laser beam to the laser along an original path to calibrate the vertical plane of the radar calibration plate, so that the radar calibration plate is perpendicular to a central axis plane of the to-be-calibrated automobile.

Optionally, the stop is provided with a strip stop groove configured to control the laser beam emitted by the laser to pass through the strip stop groove.

Optionally, the stop includes a fixing base and a sliding stop, the sliding stop being provided with the stop groove and being mounted on the fixing base to adjust positions of the sliding stop and the fixing base.

Optionally, the fixing base includes a base, a fixing bracket and a locking handle,
one end of the fixing bracket being mounted on the base, the fixing bracket being in a strip shape, and the locking handle being mounted on the fixing bracket; and
the sliding stop includes a stop portion and a sliding groove portion,
the stop portion being in a panel shape and being provided with the stop groove, the sliding groove portion being mounted on the stop portion, being in a strip shape, being movably sleeved on the fixing bracket, and being provided with a strip slot, and the locking handle passing through the strip slot and being configured to fix the sliding stop to the fixing base.

Optionally, the laser includes a transmitting portion, a mounting shaft and an observation target,
the mounting shaft being mounted on the transmitting portion and being configured to mount the laser on a wheel hub of an automobile, and
the observation target being mounted on the transmitting portion and including an observation target surface configured to display a position of the laser beam reflected by the radar calibration plate, and a middle portion of the observation target surface being provided with a transmitting hole.

Optionally, the radar calibration reflector includes a body portion and a sticking portion,
the sticking portion being disposed on a surface of the body portion and being configured to stick the body portion to the on-board radar, and
the body portion including a reflection surface configured to reflect the laser beam passing through the through hole to the through hole.

Optionally, the sticking portion is a velcro tape.

Optionally, the on-board radar calibration device includes a bracket apparatus, and the bracket apparatus includes a guide rail and a sliding member,
the sliding member being movably mounted on the guide rail and being slidable along the guide rail; and
the radar calibration plate is mounted on the sliding member, and is slidable along the guide rail together with the sliding member.

Optionally, the radar calibration laser is mounted on the radar calibration plate, and the radar calibration laser and the radar calibration plate are slidable along the guide rail together with the sliding member.

Optionally, the bracket apparatus includes:
a bracket assembly; and
a beam assembly mounted on the bracket assembly, where the beam assembly is movable relative to the bracket assembly in a vertical direction, and includes the guide rail, the guide rail being horizontally disposed.

Optionally, the bracket assembly includes a bracket body and a height adjustment member,
at least three height adjustment members being mounted on a bottom surface of the bracket body and being configured to adjust an overall horizontal angle of the bracket body and a pitch angle of the bracket body.

Optionally, there are three height adjustment members, the three height adjustment members being distributed as an isosceles triangle and being configured to cooperatively adjust the overall horizontal angle of the bracket body, and a height adjustment member at a vertex position of a vertex angle of the isosceles triangle being configured to adjust the pitch angle of the bracket body.

Optionally, the bracket assembly includes a base bracket and a pole bracket, one end of the pole bracket being connected to the base bracket, and the base bracket supporting the pole bracket;
the beam assembly is mounted on the pole bracket; and
the base bracket includes a roller, the bracket body and the height adjustment member,
at least three rollers being mounted on the bottom surface of the bracket body to facilitate movement of the base bracket.

Optionally, the pole bracket includes a lifting screw,
the lifting screw being disposed in a vertical direction; and
the beam assembly is sleeved on the lifting screw and is threadably fitted with the lifting screw, when the lifting screw rotates around a central axis of the lifting screw, the lifting screw driving the beam assembly to move along the lifting screw in a vertical direction.

Optionally, the pole bracket includes a lifting guide rail,
the lifting guide rail including a vertical bar disposed in a vertical direction; and
the beam assembly is movably mounted on the vertical bar, the vertical bar being configured to guide the beam assembly to move in a vertical direction.

Optionally, the lifting guide rail includes a horizontal bar mounted on the vertical bar in a horizontal direction; and
one end of the lifting screw is mounted on the horizontal bar, and the other end of the lifting screw is mounted on the bracket body.

Optionally, the lifting guide rail includes a horizontal bar and a bottom bar;
two vertical bars are disposed in parallel in a vertical direction and are spaced apart by a preset distance;
the horizontal bar is disposed in a horizontal direction, and two ends of the horizontal bar are respectively mounted on the two vertical bars;
the bottom bar is fixedly mounted on the bracket body, and an end of each of the vertical bars away from the horizontal bar is fixedly mounted on the bottom bar; and
one end of the lifting screw is fixedly mounted on the horizontal bar, and the other end of the lifting screw is fixedly mounted on the bottom bar.

Optionally, the pole bracket includes a height gauge, the height gauge being mounted on the vertical bar in a vertical direction and being configured to measure a moving distance of the beam assembly in a vertical direction.

Optionally, the beam assembly includes a support member and the guide rail;
the support member includes a support body and a movable block,
the movable block being fixedly mounted on the support body and sleeved on the lifting screw, and being threadably fitted with the lifting screw;
the guide rail is fixedly mounted on the support body in a horizontal direction; and
the sliding member is movably mounted on the guide rail and is movable along the guide rail in a horizontal direction.

Optionally, the pole bracket includes a vertical bar disposed in a vertical direction; and
the support member includes a sliding block, the sliding block being fixedly mounted on the support body, being movably mounted on the vertical bar, and being slidable along the vertical bar.

Optionally, two clamping portions respectively extend from two opposite sides of the support body, the two clamping portions being elongated, being disposed in a horizontal direction, and being spaced apart by a preset distance;
two guide rails are respectively mounted on the two clamping portions, are disposed in a horizontal direction, and are spaced apart by a preset distance; and
the sliding member is movably mounted on the guide rail through a sliding bearing.

Optionally, the beam assembly includes a level instrument configured to detect whether the guide rail is horizontally disposed.

The embodiments of the present invention further adopt the following technical solution to resolve the technical problem.

An on-board radar calibration method is provided, including:
providing a radar calibration plate, a middle portion of the radar calibration plate having a through hole;
calibrating a vertical plane of the radar calibration plate so that the radar calibration plate is perpendicular to a central axis plane of a to-be-calibrated automobile;
mounting a radar calibration reflector on a surface of an on-board radar;
providing a radar calibration laser so that a laser beam emitted by the radar calibration laser passes through the through hole, and adjusting a position of the radar calibration plate and a position of the radar calibration laser so that the laser beam emitted through the through hole is irradiated to the radar calibration reflector; and
adjusting the on-board radar until a laser spot reflected by the radar calibration reflector falls on a predetermined position on the radar calibration plate.

Optionally, the calibrating a vertical plane of the radar calibration plate so that the radar calibration plate is perpendicular to a central axis plane of a to-be-calibrated automobile includes:
providing a laser and a stop, the laser comprising a transmitting hole, and the stop being provided with a stop groove and being placed between the laser and the radar calibration plate;
enabling the laser so that the transmitting hole emits a laser beam;
adjusting the stop groove and the laser so that the laser beam emitted by the laser is parallel to the central axis plane of the to-be-calibrated automobile and passes through the stop groove after being emitted in a horizontal direction; and
adjusting the position of the radar calibration plate so that the laser beam is returned along an original path to be projected to the transmitting hole.

In comparison with the prior art, the radar calibration reflector may be mounted on on-board radars of different automobile models. After the calibration of the vertical plane of the radar calibration plate is completed, the laser beam emitted by the radar calibration laser passes through the through hole of the radar calibration plate, and the radar calibration reflector reflects the laser beam passing through the through hole to the through hole. In this way, the on-board radars of different automobile models can be calibrated, thereby facilitating the calibration of the on-board radars.

In addition, the calibration of the vertical plane of the radar calibration plate may be implemented by using the radar calibration plate, the stop, and the laser. The radar calibration plate may be used for both vertical plane calibration and on-board radar calibration. In this way, a quantity of elements of the on-board radar calibration device is reduced, costs are reduced, and a calibration operation is simplified.

### BRIEF DESCRIPTION OF THE DRAWINGS

One or more embodiments are exemplified by the pictures in the accompanying drawings. These exemplary descriptions do not constitute a limitation on the embodiments. Elements with the same reference numerals in the accompanying drawings are denoted as similar elements. Unless otherwise stated, the pictures in the accompanying drawings do not constitute a limitation on scale.
FIG. 1 is a three-dimensional view of an on-board radar calibration device according to an embodiment of the present invention;
FIG. 2 is a three-dimensional view of a bracket apparatus of the calibration device in FIG. 1;
FIG. 3 is a three-dimensional view of the bracket apparatus in FIG. 2 from another angle;
FIG. 4 is a front view of the bracket apparatus in FIG. 2;
FIG. 5 is a three-dimensional view of a radar calibration plate of the calibration device in FIG. 1;
FIG. 6 is a three-dimensional view of a stop of the calibration device in FIG. 1;
FIG. 7 is a three-dimensional view of the stop in FIG. 6 from another angle;
FIG. 8 is a three-dimensional view of a laser of the calibration device in FIG. 1;
FIG. 9 is a three-dimensional view of the laser in FIG. 8 from another angle;
FIG. 10 is a three-dimensional view of a radar calibration reflector of the calibration device in FIG. 1;
FIG. 11 is a schematic diagram of calibrating a vertical plane of a radar calibration plate of the calibration device in FIG. 1 by the calibration device;
FIG. 12 is a schematic diagram of calibrating an on-board radar by the calibration device in FIG. 1;
FIG. 13 is a flowchart of an on-board radar calibration method according to another embodiment of the present invention; and
FIG. 14 is a specific flowchart of one of steps of the on-board radar calibration method in FIG. 13.

### DETAILED DESCRIPTION

In order to facilitate understanding of the present invention, the following describes the present invention in more detail with reference to the accompanying drawings and specific embodiments. It should be noted that when an element is described as "fixed to" another element, it may be directly on the another element, or there may be one or more centered elements in between. When an element is referred to as being "connected" to another element, it can be directly connected to the another element or one or more centered elements may be present in between. The terms "vertical", "horizontal", "left", "right", "inside", "outside" and similar expressions used in this specification are for illustrative purposes only.

Unless defined otherwise, all technical and scientific terms used in this specification have the same meaning as commonly understood by a person skilled in the technical field of the present invention. The terms used in the description of the present invention are only for the purpose of describing specific embodiments, and are not intended to limit the present invention. The term "and / or" used in this specification includes any and all combinations of one or more of the associated listed items.

In addition, the technical features involved in the different embodiments of the present invention described below can be combined with each other as long as they do not conflict with each other.

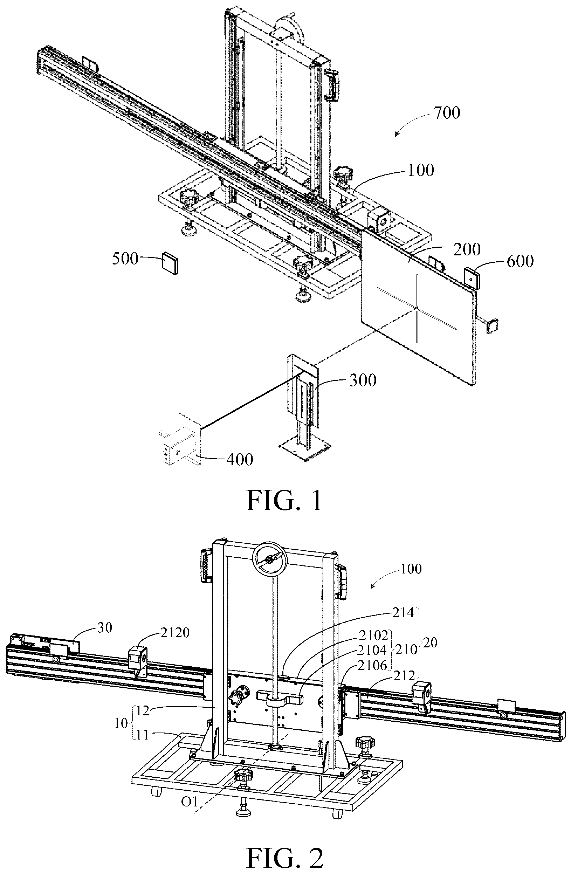

Referring to FIG. 1, an on-board radar calibration device 700 provided in an embodiment of the present invention includes a bracket apparatus 100, a radar calibration plate 200, a stop 300, a laser 400, a radar calibration reflector 500 and a radar calibration laser 600. The radar calibration plate 200 is mounted on the bracket apparatus 100 and is movable relative to the bracket apparatus 100 in a horizontal direction or a vertical direction. The bracket apparatus 100 is configured to support the radar calibration plate 200. The laser 400 is configured to emit a laser beam, the stop 300 is configured to control whether the laser beam passes through the stop 300, and the radar calibration plate 200 is configured to reflect the laser beam passing through the stop 300 to return to the laser 400 along an original path, to calibrate a vertical plane of the radar calibration plate 200. The radar calibration laser 600 is configured to emit a laser beam after the calibration of the vertical plane of the radar calibration plate 200 is completed, and the radar calibration reflector 500 is configured to reflect the laser beam emitted by the radar calibration laser 600 to the radar calibration plate 200, to calibrate a mounting position and a mounting angle of an on-board radar.

Referring to FIG. 2, the bracket apparatus 100 includes a bracket assembly 10, a beam assembly 20 and a sliding member 30. The beam assembly 20 is mounted on the bracket assembly 10 and is movable relative to the bracket assembly 10 in a vertical direction. The sliding member 30 is mounted on the beam assembly 20 and is movable relative to the beam assembly 20 in a horizontal direction. The radar calibration plate 200 is mounted on the sliding member 30 and is movable relative to the beam assembly 20 together with the sliding member 30 in a horizontal direction.

The bracket assembly 10 includes a base bracket 11 and a pole bracket 12, one end of the pole bracket 12 being connected to the base bracket 11, and the base bracket 11 supporting the pole bracket 12.

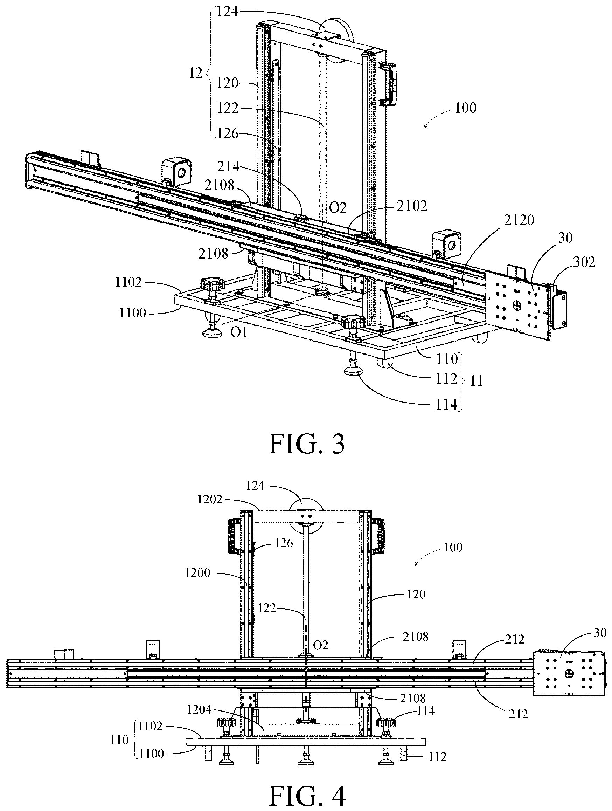

Referring to FIG. 3 and FIG. 4, the base bracket 11 includes a bracket body 110, a roller 112 and a height adjustment member 114. The bracket body 110 is a rectangular panel made of a metal material. In order to reduce weight, a plurality of hollowed-out areas are formed. The bracket body 110 includes a bottom surface 1100 and an upper surface 1102 opposite to each other. The bracket body 110 has a central axis 01.

The roller 112 is mounted on the bottom surface 1100 to facilitate movement of the base bracket 11. In this embodiment, the roller 112 is a universal moving roller, so that the base bracket 11 can arbitrarily move frontward/rearward and leftward/rightward. There are four rollers 112, which are respectively mounted at four corners of the bracket body 110. It can be understood that, in some other embodiments, a shape of the bracket body 110 may change based on an actual requirement and is not limited to a rectangle. For example, the bracket body 110 may be circular. A quantity of the rollers 112 may be increased or decreased based on an actual requirement, provided that there are at least three rollers 112.

The height adjustment member 114 is mounted on the bottom surface 1100 and is configured to adjust a height of the bracket body 110. In this embodiment, the height adjustment member 114 is an adjustment handwheel, and there are three adjustment handwheels. The three adjustment handwheels 114 are distributed as an isosceles triangle. Two adjustment handwheels 114 located at a bottom edge of the isosceles triangle are disposed on one side of the bracket body 110 and are symmetrically disposed along the central axis 01 of the bracket body 110. Another adjustment handwheel 114 is disposed on the other side of the bracket body 110 and is disposed on the central axis O1 of the bracket body 110 (that is, at a vertex position of a vertex angle of the isosceles triangle). The three adjustment handwheels 114 may cooperatively adjust an overall horizontal angle of the bracket body 110, and the adjustment handwheel 114 on the central axis O1 of the bracket body 110 is adjusted alone to adjust a pitch angle of the bracket body 110.

It can be understood that the height adjustment member 114 may be other height adjustment apparatuses. A quantity of the height adjustment members 114 may be increased based on an actual requirement, provided that there are at least three height adjustment members 114, and the at least three height adjustment members 114 are disposed in the above-mentioned distribution manner.

The pole bracket 12 includes a lifting guide rail 120, a lifting screw 122, a lifting handle 124 and a height gauge 126.

The lifting guide rail 120 is mounted on the bracket body 110. The lifting guide rail 120 includes a vertical bar 1200, a horizontal bar 1202 and a bottom bar 1204. Two vertical bars 1200 are disposed in parallel in a vertical direction and are spaced apart by a preset distance, and are configured to guide the beam assembly 20 to move in a vertical direction. The horizontal bar 1202 is disposed in a horizontal direction, and two ends of the horizontal bar 1202 are respectively mounted on the two vertical bars 1200. The bottom bar 1204 is fixedly mounted on the bracket body 110, and an end of each of the vertical bars 1200 away from the horizontal bar 1202 is fixedly mounted on the bottom bar 1204.

It can be understood that, in some other embodiments, a quantity of the vertical bars 1200 may be increased or decreased based on an actual situation. For example, the quantity of the vertical bars 1200 may be one or three.

The lifting screw 122 is fixedly mounted on the lifting guide rail 120 in a vertical direction, one end of the lifting screw 122 being fixedly mounted on the horizontal bar 1202, and the other end of the lifting screw 122 being fixedly mounted on the bottom bar 1204.

It can be understood that, in some other embodiments, the bottom bar 1204 may be omitted, and an end of each of the vertical bars 1200 away from the horizontal bar 1202 is fixedly mounted on the bracket body 110. The lifting screw 122 is disposed in a vertical direction, one end of the lifting screw 122 being fixedly mounted on the horizontal bar 1202, and the other end of the lifting screw 122 being fixedly mounted on the bracket body 110.

The lifting handle 124 is mounted on the horizontal bar 1202 and is connected to the lifting screw 122 for rotation, to drive the lifting screw 122 to rotate around a central axis of the lifting screw 122. In this embodiment, a connecting rod of the lifting handle 124 is perpendicular to the lifting screw 122 and is connected to the lifting screw 122 through a gear structure. It can be understood that, in some other embodiments, the connecting rod of the lifting handle 124 may be coaxial with the lifting screw 122, and is directly connected to the lifting screw 122; or the lifting handle 124 may be replaced with other apparatuses for driving the lifting screw 122 to rotate, for example, a motor.

The height gauge 126 is mounted on the vertical bar 1200 in a vertical direction, and the height gauge 126 has a scale for measuring a moving distance of the beam assembly 20 in a vertical direction.

Referring again to FIG. 2 and FIG. 3, the beam assembly 20 includes a support member 210, a guide rail 212 and a level instrument 214. The support member 210 is mounted on the lifting guide rail 120. Under guidance of the lifting guide rail 120, the support member 210 is movable relative to the lifting guide rail 120 in a vertical direction. The guide rail 212 is fixedly mounted on the support member 210 and is movable relative to the lifting guide rail 120 together with the support member 210 in a vertical direction. The sliding member 30 is mounted on the guide rail 212 and is movable relative to the guide rail 212 in a horizontal direction.

The support member 210 includes a support body 2102, a movable block 2104 and a sliding block 2106.

The support body 2102 is substantially in a panel shape. Two clamping portions 2108 respectively extend from two opposite sides of the support body 2102, the two clamping portions 2108 being elongated, being disposed in parallel in a horizontal direction, and being spaced apart by a preset distance.

The movable block 2104 being fixedly mounted on the support body 2102 and sleeved on the lifting screw 122. The movable block 2104 is threadably fitted with the lifting screw 122. When the lifting screw 122 rotates around the central axis of the lifting screw 122, the movable block 2104 may be driven to move along the lifting screw 122 in a vertical direction, thereby driving the beam assembly 20 to move in a vertical direction. The movable block 2104 and the clamping portion 2108 are respectively located on two opposite sides of the support body 2102.

The sliding block 2106 is fixedly mounted on the support body 2102 and is located on a same side of the support body 2102 as the movable block 2104. At least one of the sliding blocks 2106 is correspondingly mounted on each of the vertical bars 1200, and each of the sliding blocks 2106 is movably mounted on a corresponding vertical bar 1200 and is slidable along the corresponding vertical bar 1200. In this embodiment, two of the sliding blocks 2106 are correspondingly mounted on each of the vertical bars 1200. It can be understood that, in some other embodiments, a quantity of the sliding blocks 2106 correspondingly mounted on each of the vertical bars 1200 may be increased or decreased based on an actual requirement, for example, decreased to one or increased to three.

Two guide rails 212 are respectively mounted on the two clamping portions 2108, and are disposed in parallel a horizontal direction at an interval of a preset distance. On two sides of the guide rail 212, there is a horizontal scale 2120 using a center of the guide rail 212 as a zero point and extending to the two sides, respectively. In other words, a scale value of the horizontal scale 2120 uses the center of the guide rail 212 as the zero point, and gradually increases to the two sides of the guide rail 212, respectively, thereby facilitating positioning of the sliding member 30. A central axis O2 of the guide rail 212 and the central axis O1 of the bracket body 110 are located on a same plane. It can be understood that, in some other embodiments, a quantity of the guide rails 212 may be increased or decreased based on an actual requirement, for example, reduced to one or increased to three. The guide rail 212 may be fixedly mounted on the support member 210 in any other proper manners. For example, the clamping portion 2108 is omitted, and the guide rail 212 is directly welded to the support body 2102.

The level instrument 214 is mounted on an upper side of one of the clamping portions 2108 and is configured to detect whether the clamping portion 2108 is horizontally disposed, to determine whether the guide rail 212 is horizontally disposed. It can be understood that, in some other embodiments, the level instrument 214 may be mounted on the guide rail 212 or on other parts of the beam assembly 20, provided that the level instrument 214 can be used to detect whether the guide rail 212 is horizontally disposed.

The sliding member 30 is movably mounted on the guide rail 212 and can move along the guide rail 212 in a horizontal direction. In this embodiment, the sliding member 30 is movably mounted on the guide rail 212 through a sliding bearing 302. The sliding member 30 includes a plurality of mounting points for mounting the radar calibration plate 200. It can be understood that, in some other embodiments, the sliding member 30 may be movably mounted on the guide rail 212 in other proper manners. For example, the sliding bearing 302 is omitted, and the sliding member 30 may be directly movably mounted on the guide rail 212.

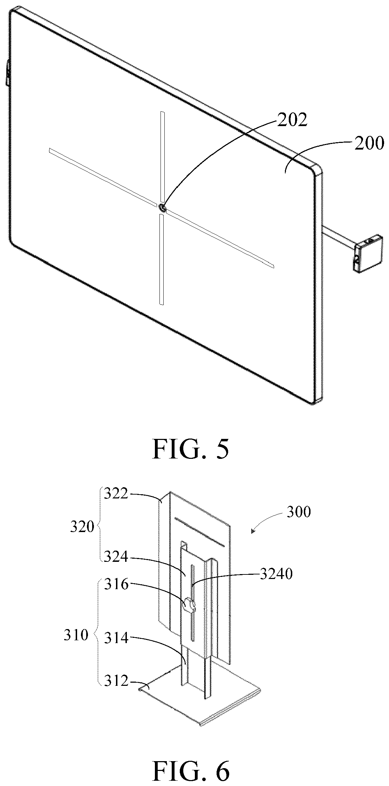

Referring to FIG. 5, the radar calibration plate 200 is in a rectangular panel shape and includes a light reflecting surface for reflecting the laser beam passing through the stop 300 to the laser 400. A middle portion of the radar calibration plate 200 has a through hole 202. The radar calibration plate 200 includes a substrate. One surface of the substrate is coated with a light reflecting material for reflecting the laser beam passing through the stop 300 to the laser 400. For example, the surface of the substrate is coated with a silver material. The substrate may be made of a lightweight material such as a plastic material or a lightweight metal material such as an aluminum alloy or a magnesium alloy. It can be understood that, in some other embodiments, the substrate may be made of a material capable of reflecting light, without a need to coat a light reflecting material.

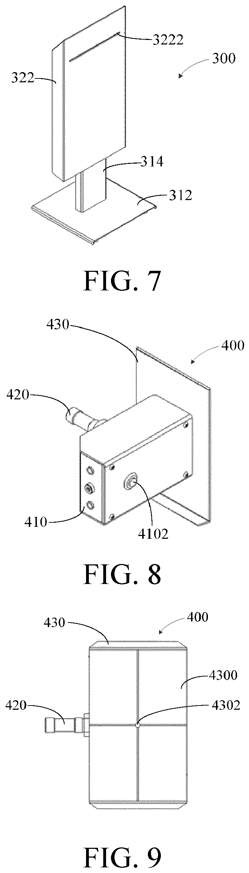

Referring to FIG. 6 and FIG. 7, the stop 300 includes a fixing base 310 and a sliding stop 320.

The fixing base 310 includes a base 312, a fixing bracket 314 and a locking handle 316. The base 312 is a rectangular panel, one end of the fixing bracket 314 is mounted on a middle portion of the base 312, and the fixing bracket 314 is perpendicular to the base 312. The fixing bracket 314 is in a strip shape. The locking handle 316 is mounted on the fixing bracket 314.

The sliding stop 320 includes a stop portion 322 and a sliding groove portion 324. The stop portion 322 is substantially in a panel shape, and is provided with a strip stop groove 3222 configured to allow a laser beam to pass through. A width of the stop groove 3222 is slightly smaller than a diameter of a laser spot emitted by the laser 400, so as to detect whether the laser beam exactly passes through the stop groove 3222. The sliding groove portion 324 is mounted on the stop portion 322, and is in a strip shape and is sleeved on the fixing bracket 314. The sliding groove portion 324 is slidable relative to the fixing bracket 314. The sliding groove portion 324 is provided with a strip slot 3240, and the locking handle 316 passes through the slot 3240 and is configured to stably fix the sliding stop 320 to the fixing base 310.

Referring to FIG. 8 and FIG. 9, the laser 400 is a hub laser, including a transmitting portion 410, a mounting shaft 420 and an observation target 430. The transmitting portion 410 is configured to emit a laser beam and includes a switch 4102 configured to enable or disable the transmitting portion 410. The mounting shaft 420 is mounted on the transmitting portion 410 and is configured to mount the hub laser 400 on a wheel hub of an automobile. The observation target 430 is mounted on the transmitting portion 410. The observation target 430 is a rectangular panel and includes an observation target surface 4300 configured to display a position of a laser beam reflected by the radar calibration plate 200. A middle portion of the observation target surface 4300 is provided with a transmitting hole 4302 configured to allow the laser beam to be emitted.

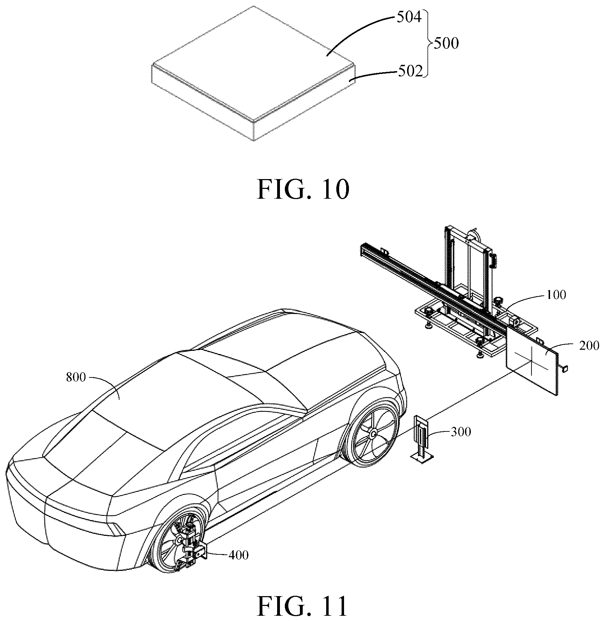

Referring to FIG. 10, the radar calibration reflector 500 is a cube and includes a body portion 502 and a sticking portion 504. The sticking portion 504 is disposed on a surface of the body portion 502 and is configured to stick the body portion 502 to a surface of the on-board radar. The sticking portion 504 is a velcro tape, which can be quickly and easily stuck to the surface of the to-be-calibrated on-board radar. The body portion 502 includes a reflecting surface for reflecting a laser beam. A size of the reflecting surface is 10 ^{∗} 10 mm², and the reflecting surface and the sticking portion 504 are respectively located on two opposite sides of the body portion 502.

It can be understood that, in some other embodiments, the radar calibration reflector 500 may be mounted on the surface of the on-board radar in other proper manners, for example, through magnet attraction.

Referring again to FIG. 1, the radar calibration laser 600 is fixedly mounted on the radar calibration plate 200. A laser transmitting hole of the radar calibration laser 600 is aligned with the through hole 202 for emitting the laser beam to pass through the through hole 202. The radar calibration laser 600 and the radar calibration plate 200 are horizontally slidable along the guide rail 212 together with the sliding member 30. The radar calibration laser 600 may be a laser in the prior art, provided that the radar calibration laser 600 can emit a laser beam to pass through the through hole 202.

It can be understood that, in some other embodiments, the radar calibration laser 600 may be detachably or fixedly mounted on the radar calibration plate 200; or the radar calibration laser 600 may be fixedly or detachably mounted on the sliding member 30; or the radar calibration laser 600 may be mounted on the guide rail 212 through a sliding block, and can horizontally slide along the guide rail 212.

Referring to FIG. 11, in the first step of calibrating the on-board radar, the automobile 800 is horizontally disposed (that is, the automobile 800 is parked on a horizontal plane), and the bracket apparatus 100 is moved to the front of the to-be-calibrated automobile 800 through the roller 112 with a distance of about 1 meter, so that the guide rail 212 is substantially parallel to an axle of the automobile 800. The level instrument 214 is observed and the height adjustment member 114 is adjusted, so that the guide rail 212 is horizontally disposed. The radar calibration plate 200 is mounted on the sliding member 30, and the radar calibration plate 200 and the sliding member 30 move along the guide rail 212 to a side of the to-be-calibrated automobile 800. A wheel clamp is mounted on one rear wheel of the automobile 800, and the laser 400 is mounted. The laser 400 is enabled, so that the laser beam emitted by the laser 400 is irradiated on the light reflecting surface of the radar calibration plate 200. The stop 300 is taken and placed at a middle position between the laser 400 and the radar calibration plate 200, and the stop portion 322 is perpendicular to the laser beam. A height of the stop groove 3222 is adjusted to be consistent with that of the transmitting hole 4302 of the laser 400. An emission angle of the laser 400 is adjusted so that the laser 400 emits a laser beam in a horizontal direction. In addition, the laser beam emitted by the laser 400 is parallel to the central axis plane of the to-be-calibrated automobile 800, and the position of the stop 300 is properly moved so that the laser beam can exactly pass through the middle of the stop groove 3222. Based on an actual situation, the sliding member 30 is slid and/or the height of the guide rail 212 is adjusted, so that the position of the radar calibration plate 200, and the laser beam in this case can be irradiated to the radar calibration plate 200. A position of the reflected laser point is observed, the bracket apparatus 100 is moved, and the height adjustment member 114 is adjusted, so that the laser beam reflected by the radar calibration plate 200 can be exactly returned along the original path to be projected to the transmitting hole 4302 of the laser 400. In this case, the calibration of the vertical plane of the radar calibration plate 200 is completed, the guide rail 212 is perpendicular to the central axis plane of the automobile 800, and the radar calibration plate 200 is vertically disposed and is also perpendicular to the central axis plane of the automobile 800.

In this embodiment, when the automobile 800 is horizontally disposed, the central axis plane of the automobile 800 is vertically disposed, and the automobile 800 is symmetrical relative to the central axis plane.

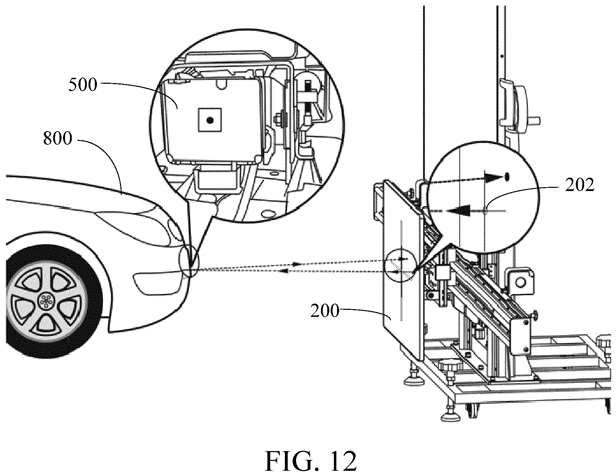

Referring to FIG. 1 and FIG. 12, in the second step of calibrating the on-board radar, the radar calibration plate 200 and the radar calibration laser 600 move to the front of the on-board radar through the sliding member 30. The radar calibration reflector 500 is stuck on the surface of the on-board radar. The surface that is of the on-board radar and on which the radar calibration reflector 500 is stuck is a flat surface. The radar calibration laser 600 is enabled so that the laser beam of the radar calibration laser 600 passes through the through hole 202 of the radar calibration plate 200. The height of the guide rail 212 is adjusted so that the laser beam emitted by the radar calibration laser is irradiated to the radar calibration reflector 500 and then is reflected to the radar calibration plate 200. The position of the laser point reflected by the radar calibration reflector 500 on the radar calibration plate 200 is observed. A fine adjustment screw at a corner of the on-board radar is adjusted. The reflected laser point is adjusted to the horizontal line position of the cross calibration line on the radar calibration plate 200 to complete vertical (pitch) adjustment. The reflected laser point is adjusted to the vertical line position of the cross calibration line on the radar calibration plate 200 to complete horizontal (deflection) adjustment. In this case, the laser point reflected by the radar calibration reflector 500 falls on the through hole 202 in the center of the radar calibration plate 200, so that the horizontal (deflection) adjustment and the vertical (pitch) adjustment of the on-board radar are completed, that is, the calibration of the on-board radar is completed. Some on-board radars have only bolts for vertical (pitch) adjustment. As long as the reflected laser point is adjusted to the horizontal line position of the cross calibration line on the radar calibration plate 200, the vertical (pitch) adjustment is completed, that is, the calibration of the on-board radar is completed.

In another implementation, the position of the radar calibration plate 200 may be finely adjusted by emitting a laser beam through the radar calibration laser 600 and reflecting the laser beam through the radar calibration reflector 500, so that the position of the radar calibration plate 200 is precise, thereby facilitating subsequent calibration of the on-board radar and improving precision of the calibration of the on-board radar.

Specifically, the laser beam emitted by the radar calibration laser 600 passes through the through hole 202 on the radar calibration plate 200 and is emitted to the radar calibration reflector 500. The on-board radar remains stationary, and the radar calibration reflector 500 is configured to reflect the laser beam to the radar calibration plate 200. A height of the radar calibration plate 200 is adjusted through a vertical adjustment mechanism on the bracket apparatus, a horizontal position of the radar calibration plate 200 relative to the on-board radar is adjusted through the guide rail on the bracket apparatus, and positions in the foregoing two dimensions of the radar calibration plate 200 are adjusted, so that the laser point reflected by the radar calibration reflector 500 is finally presented at a predetermined position on the radar calibration plate 200. The predetermined position may be a position of the through hole 202 or other positions specified based on a calibration requirement. This is not limited in this embodiment of the present application. Then, the on-board radar is calibrated by using a calibration method corresponding to the on-board radar. For example, after the radar calibration plate is adjusted to a preset position, an angle of the radar calibration plate is further adjusted, so that the radar calibration plate reflects a radar wave emitted by the on-board radar at a plurality of angles. A computer uses calibration software to calculate a phase difference between a radar wave emitted by the on-board radar and a radar wave reflected by the radar calibration plate to determine a calibration scheme for the on-board radar.

It can be understood that, in some other embodiments, the vertical plane of the radar calibration plate 200 may be calibrated by using a vertical plane calibration device in the prior art, so that the radar calibration plate 200 is perpendicular to the center axis plane of the automobile. The radar calibration plate 200 and the radar calibration laser 600 move to the front of the on-board radar, the radar calibration reflector 500 is mounted on the on-board radar, the laser beam emitted by the radar calibration laser 600 passes through the through hole 202 of the radar calibration plate 200, and the radar calibration reflector 500 reflects the laser beam passing through the through hole 202 to the through hole 202, thereby implementing the calibration of the on-board radar. A person skilled in the art should understand that if the vertical plane of the radar calibration plate 200 is calibrated by using the vertical plane calibration device in the prior art, the radar calibration plate 200 is not required to reflect a light beam. Therefore, the radar calibration plate 200 does not need a light reflecting surface, and only needs to be in a panel shape and has the through hole 202. The radar calibration plate 200 may be a plastic panel, an aluminum panel, or the like.

In this embodiment, the radar calibration reflector 500 may be mounted on on-board radars of different automobile models. After the calibration of the vertical plane of the radar calibration plate 200 is completed, the laser beam emitted by the radar calibration laser 600 passes through the through hole 202 of the radar calibration plate 200, and the radar calibration reflector 500 reflects the laser beam passing through the through hole 202 to the through hole 202. In this way, the on-board radars of different automobile models can be calibrated.

In addition, the calibration of the vertical plane of the radar calibration plate 200 may be implemented by using the radar calibration plate 200, the stop 300, and the laser 400. The radar calibration plate 200 may be used for both vertical plane calibration and on-board radar calibration. In this way, a quantity of elements of the on-board radar calibration device 700 is reduced, costs are reduced, and a calibration operation is simplified.

In addition, the radar calibration plate 200 can horizontally slide along the guide rail 212. When there are a plurality of on-board radars in an automobile, after calibration of one on-board radar is completed, the radar calibration plate 200 may slide to the front of another on-board radar to perform a calibration operation on the another on-board radar. Therefore, horizontal calibration does not need to be performed on the guide rail 212, thereby facilitating calibration of the plurality of on-board radars of the automobile.

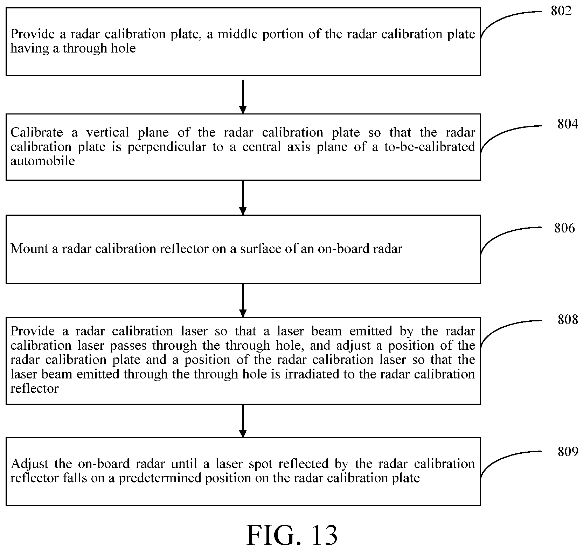

Another embodiment of the present invention provides an on-board radar calibration method. The method is implemented by using the on-board radar calibration device 700 provided in the foregoing embodiment. Referring to FIG. 13, the method includes the following steps.

802. A radar calibration plate is provided, a middle portion of the radar calibration plate having a through hole.

804. A vertical plane of the radar calibration plate is calibrated so that the radar calibration plate is perpendicular to a central axis plane of a to-be-calibrated automobile.

After the calibration of the vertical plane of the radar calibration plate 200 is completed, the radar calibration plate 200 is vertically disposed and is also perpendicular to the central axis plane of the automobile 800. In this embodiment, when the automobile 800 is horizontally disposed, the central axis plane of the automobile 800 is vertically disposed, and the automobile 800 is symmetrical relative to the central axis plane.

806. A radar calibration reflector is mounted on a surface of an on-board radar.

808. A radar calibration laser is provided so that a laser beam emitted by the radar calibration laser passes through the through hole, and a position of the radar calibration plate and a position of the radar calibration laser are adjusted so that the laser beam emitted through the through hole is irradiated to the radar calibration reflector.

The radar calibration plate 200 on which the radar calibration laser 600 is mounted is mounted on the sliding member 30. The radar calibration laser 600 is enabled so that the laser beam emitted by the radar calibration laser 600 passes through the through hole 202. A height of the guide rail 212 and left and right positions of the sliding member 30 are adjusted to adjust the position of the radar calibration plate 200 and the position of the radar calibration laser 600 so that the laser beam emitted through the through hole 202 is irradiated to the radar calibration reflector 500.

809. The on-board radar is adjusted until a laser spot reflected by the radar calibration reflector falls on a predetermined position on the radar calibration plate.

The predetermined position on the radar calibration plate 200 may be the through hole 202 in the middle portion of the radar calibration plate 200, or may be a vertical line position or a horizontal line position of a cross calibration line on the radar calibration plate 200. A fine adjustment screw at a corner of the on-board radar is adjusted. The reflected laser point is adjusted to the horizontal line position of the cross calibration line on the radar calibration plate 200 to complete vertical (pitch) adjustment. The reflected laser point is adjusted to the vertical line position of the cross calibration line on the radar calibration plate 200 to complete horizontal (deflection) adjustment. In this case, the laser point reflected by the radar calibration reflector 500 falls on the through hole 202 in the middle portion of the radar calibration plate 200, so that the horizontal (deflection) adjustment and the vertical (pitch) adjustment of the on-board radar are completed. Some on-board radars have only bolts for vertical (pitch) adjustment. As long as the reflected laser point is adjusted to the horizontal line position of the cross calibration line on the radar calibration plate 200, the vertical (pitch) adjustment is completed, that is, the calibration of the on-board radar is completed.

In this embodiment, the radar calibration reflector 500 may be mounted on on-board radars of different automobile models. After the calibration of the vertical plane of the radar calibration plate 200 is completed, the laser beam emitted by the radar calibration laser 600 passes through the through hole 202 of the radar calibration plate 200, and the radar calibration reflector 500 reflects the laser beam passing through the through hole 202 to the through hole 202. In this way, the on-board radars of different automobile models can be calibrated.

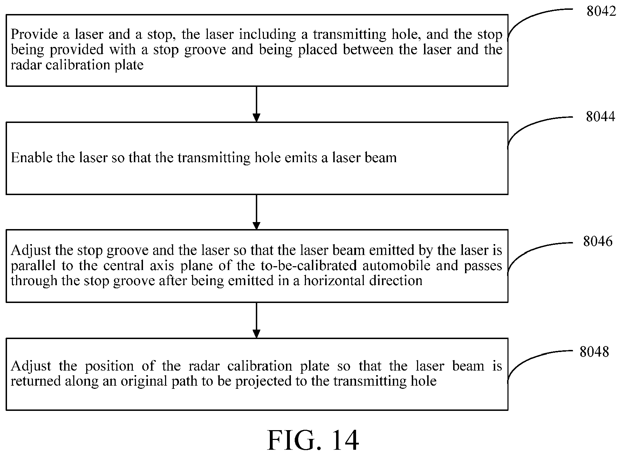

Referring to FIG. 14, in some embodiments, that a vertical plane of the radar calibration plate is calibrated so that the radar calibration plate is vertically disposed and is perpendicular to a central axis plane of a to-be-calibrated automobile in step 804 includes:
8042. A laser and a stop are provided, the laser including a transmitting hole, and the stop being provided with a stop groove and being placed between the laser and the radar calibration plate.

8044. The laser is enabled so that the transmitting hole emits a laser beam.

8046. The stop groove and the laser are adjusted so that the laser beam emitted by the laser is parallel to the central axis plane of the to-be-calibrated automobile and passes through the stop groove after being emitted in a horizontal direction.

The stop 300 is placed at a middle position between the laser 400 and the radar calibration plate 200, and the stop portion 322 is perpendicular to the laser beam. A height of the stop groove 3222 is adjusted to be consistent with that of the transmitting hole 4302 of the laser 400. An emission angle of the laser 400 is adjusted and a position of the stop 300 is properly moved, so that the laser beam emitted by the laser 400 is parallel to the central axis plane of the to-be-calibrated automobile 800, and passes through the stop groove 3222 in the middle after being emitted in a horizontal direction.

8048. The position of the radar calibration plate is adjusted so that the laser beam is returned along an original path to be projected to the transmitting hole.

Based on an actual situation, the sliding member 30 is slid and/or the height of the guide rail 212 is adjusted, so that the position of the radar calibration plate 200, and the laser beam in this case can be irradiated onto the light reflecting surface of the radar calibration panel 200. A position of the reflected laser point is observed, the bracket apparatus 100 is moved, and the height adjustment member 114 is adjusted to adjust the position of the radar calibration plate 200, so that the laser beam reflected by the radar calibration plate 200 can be exactly returned along the original path to be projected to the transmitting hole 4302 of the laser 400. In this case, the calibration of the vertical plane of the radar calibration plate 200 is completed, and the radar calibration plate 200 is vertically disposed and is perpendicular to the central axis plane of the automobile 800.

In this embodiment, the calibration of the vertical plane of the radar calibration plate 200 may be implemented by using the radar calibration plate 200, the stop 300, and the laser 400. The radar calibration plate 200 may be used for both vertical plane calibration and on-board radar calibration. In this way, a quantity of elements of the on-board radar calibration device 700 is reduced, costs are reduced, and a calibration operation is simplified.

It should be noted that, in this embodiments of the present invention, the method is implemented by using the on-board radar calibration device 700 provided in the foregoing embodiment. For technical details that are not described in detail in the method embodiment, refer to descriptions of the on-board radar calibration device 700 provided in the embodiments of the present invention.

Finally, it should be explained that: the above embodiments are only used to describe the technical solution of the present invention, but not limited thereto; under the idea of the present invention, the technical features in the above embodiments or different embodiments may also be combined. The steps can be implemented in any order, and there are many other variations of different aspects of the invention as described above, for the sake of brevity, they are not provided in the details; although the present invention is described in detail with reference to the foregoing embodiments, those of ordinary skill in the art should understand that: it can still modify the technical solutions described in the foregoing embodiments, or equivalently replace some of the technical features; and these modifications or replacements do not make the essence of the corresponding technical solutions separate from the scope of the technical solutions of the embodiments of the present application.

## Claims

1. An on-board radar calibration device (700), comprising:
a radar calibration plate (200) comprising a through hole (202);
a radar calibration laser (600) configured to: after calibration of a vertical plane of the radar calibration plate (200) is completed, emit a laser beam to pass through the through hole (202); and
a radar calibration reflector (500) mounted on an on-board radar of a to-be-calibrated automobile to reflect the laser beam passing through the through hole (202), so that the reflected laser beam is returned to a predetermined position on the radar calibration plate (200) to calibrate the on-board radar.

2. The on-board radar calibration device (700) according to claim 1, wherein the radar calibration reflector (500) comprises a body portion (502) and a sticking portion (504),
the sticking portion (504) being disposed on a surface of the body portion (502) and being configured to stick the body portion (502) to the on-board radar, and
the body portion (502) comprising a reflection surface configured to reflect the laser beam passing through the through hole (202) to the through hole (202).

3. The on-board radar calibration device (700) according to claim 2, wherein the sticking portion (504) is a velcro tape or a magnetic material.

4. The on-board radar calibration device (700) according to any of claims 1 to 3, wherein a position change of the radar calibration reflector (500) is consistent with a position change of the on-board radar, so that the laser beam reflected by the radar calibration reflector is returned to the predetermined position on the radar calibration plate after a position of the on-board radar is adjusted.

5. The on-board radar calibration device (700) according to claim 1, wherein a position of the radar calibration plate (200) may be adjusted so that the laser beam reflected by the radar calibration reflector is returned to the predetermined position on the radar calibration plate (200).

6. The on-board radar calibration device (700) according to any of claims 1 to 5, comprising:
a laser (400) configured to emit a laser beam to the radar calibration plate (200); and
a stop (300) configured to control the laser beam emitted by the laser (400) to pass through the stop (300), the radar calibration plate (200) being configured to reflect the laser beam passing through the stop (300) to return the reflected laser beam to the laser (400) along an original path to calibrate the vertical plane of the radar calibration plate (200), so that the radar calibration plate (200) is perpendicular to a central axis plane of the to-be-calibrated automobile.

7. The on-board radar calibration device (700) according to claim 6, wherein the stop (300) is provided with a strip stop groove (3222) configured to control the laser beam emitted by the laser (400) to pass through the strip stop groove (3222).

8. The on-board radar calibration device (700) according to claim 7, wherein the stop (300) comprises a fixing base (310) and a sliding stop (320), the sliding stop (320) being provided with the stop groove (3222) and being mounted on the fixing base (310) to adjust positions of the sliding stop (320) and the fixing base (310).

9. The on-board radar calibration device (700) according to claim 8, wherein the fixing base (310) comprises a base (312), a fixing bracket (314) and a locking handle (316),
one end of the fixing bracket (314) being mounted on the base (312), the fixing bracket (314) being in a strip shape, and the locking handle (316) being mounted on the fixing bracket (314); and
the sliding stop (320) comprises a stop portion (322) and a sliding groove portion (324),
the stop portion (322) being in a panel shape and being provided with the stop groove (3222), the sliding groove portion (324) being mounted on the stop portion (322), being in a strip shape, being movably sleeved on the fixing bracket (314), and being provided with a strip slot (3240), and the locking handle (316) passing through the strip slot (3240) and being configured to fix the sliding stop (320) to the fixing base (310).

10. The on-board radar calibration device (700) according to any of claims 6 to 9, wherein the laser (400) comprises a transmitting portion (410), a mounting shaft (420) and an observation target (430),
the mounting shaft (420) being mounted on the transmitting portion (410) and being configured to mount the laser (400) on a wheel hub of an automobile, and
the observation target (430) being mounted on the transmitting portion (410) and comprising an observation target surface (4300) configured to display a position of the laser beam reflected by the radar calibration plate (200), and a middle portion of the observation target surface (4300) being provided with a transmitting hole (4302).

11. The on-board radar calibration device (700) according to any of claims 1 to 10, comprising a bracket apparatus (100), wherein the bracket apparatus (100) comprises a guide rail (212) and a sliding member (30),
the sliding member (30) being movably mounted on the guide rail (212) and being slidable along the guide rail (212); and
the radar calibration plate (200) is mounted on the sliding member (30), and is slidable along the guide rail (212) together with the sliding member (30).

12. The on-board radar calibration device (700) according to claim 11, wherein the radar calibration laser (600) is mounted on the radar calibration plate (200), and the radar calibration laser (600) and the radar calibration plate (200) are slidable along the guide rail (212) together with the sliding member (30).

13. The on-board radar calibration device (700) according to claim 11 or 12, wherein the bracket apparatus (100) comprises:
a bracket assembly (10); and
a beam assembly (20) mounted on the bracket assembly (10), wherein the beam assembly (20) is movable relative to the bracket assembly (10) in a vertical direction, and comprises the guide rail (212), the guide rail (212) being horizontally disposed.

14. The on-board radar calibration device (700) according to claim 13, wherein the bracket assembly (10) comprises a bracket body (110) and a height adjustment member (114),
at least three height adjustment members (114) being mounted on a bottom surface (1100) of the bracket body (110) and being configured to adjust an overall horizontal angle of the bracket body (110) and a pitch angle of the bracket body (110).

15. The on-board radar calibration device (700) according to claim 14, wherein there are three height adjustment members (114), the three height adjustment members (114) being distributed as an isosceles triangle and being configured to cooperatively adjust the overall horizontal angle of the bracket body (110), and a height adjustment member (114) at a vertex position of a vertex angle of the isosceles triangle being configured to adjust the pitch angle of the bracket body (110).

16. The on-board radar calibration device (700) according to claim 14 or 15, wherein the bracket assembly (10) comprises a base bracket (11) and a pole bracket (12), one end of the pole bracket (12) being connected to the base bracket (11), and the base bracket (11) supporting the pole bracket (12);
the beam assembly (20) is mounted on the pole bracket (12); and
the base bracket (11) comprises a roller (112), the bracket body (110) and the height adjustment member (114),
at least three rollers (112) being mounted on the bottom surface of the bracket body (110) to facilitate movement of the base bracket (11).

17. The on-board radar calibration device (700) according to claim 16, wherein the pole bracket (12) comprises a lifting screw (122),
the lifting screw (122) being disposed in a vertical direction; and
the beam assembly (20) is sleeved on the lifting screw (122) and is threadably fitted with the lifting screw (122), when the lifting screw (122) rotates around a central axis of the lifting screw (122), the lifting screw (122) driving the beam assembly (20) to move along the lifting screw (122) in a vertical direction.

18. The on-board radar calibration device (700) according to claim 17, wherein the pole bracket (12) comprises a lifting guide rail (120),
the lifting guide rail (120) comprising a vertical bar (1200) disposed in a vertical direction; and
the beam assembly (20) is movably mounted on the vertical bar (1200), the vertical bar (1200) being configured to guide the beam assembly (20) to move in a vertical direction.

19. The on-board radar calibration device (700) according to claim 18, wherein the lifting guide rail (120) comprises a horizontal bar (1202) mounted on the vertical bar (1200) in a horizontal direction; and
one end of the lifting screw (122) is mounted on the horizontal bar (1202), and the other end of the lifting screw (122) is mounted on the bracket body (110).

20. The on-board radar calibration device (700) according to claim 18, wherein the lifting guide rail (120) comprises a horizontal bar (1202) and a bottom bar (1204);
two vertical bars (1200) are disposed in parallel in a vertical direction and are spaced apart by a preset distance;
the horizontal bar (1202) is disposed in a horizontal direction, and two ends of the horizontal bar (1202) are respectively mounted on the two vertical bars (1200);
the bottom bar (1204) is fixedly mounted on the bracket body (110), and an end of each of the vertical bars (1200) away from the horizontal bar (1202) is fixedly mounted on the bottom bar (1204); and
one end of the lifting screw (122) is fixedly mounted on the horizontal bar (1202), and the other end of the lifting screw (122) is fixedly mounted on the bottom bar (1204).

21. The on-board radar calibration device (700) according to claim 18, wherein the pole bracket (12) comprises a height gauge (126), the height gauge (126) being mounted on the vertical bar (1200) in a vertical direction and being configured to measure a moving distance of the beam assembly (20) in a vertical direction.

22. The on-board radar calibration device (700) according to claim 17, wherein the beam assembly (20) comprises a support member (210) and the guide rail (212);
the support member (210) comprises a support body (2102) and a movable block (2104),
the movable block (2104) being fixedly mounted on the support body (2102) and sleeved on the lifting screw (122), and being threadably fitted with the lifting screw (122);
the guide rail (212) is fixedly mounted on the support body (2102) in a horizontal direction; and
the sliding member (30) is movably mounted on the guide rail (212) and is movable along the guide rail (212) in a horizontal direction.

23. The on-board radar calibration device (700) according to claim 22, wherein the pole bracket (12) comprises a vertical bar (1200) disposed in a vertical direction; and
the support member (210) comprises a sliding block (2106), the sliding block (2106) being fixedly mounted on the support body (2102), being movably mounted on the vertical bar (1200), and being slidable along the vertical bar (1200).

24. The on-board radar calibration device (700) according to claim 22, wherein
two clamping portions (2108) respectively extend from two opposite sides of the support body (2102), the two clamping portions (2108) being elongated, being disposed in a horizontal direction, and being spaced apart by a preset distance;
two guide rails (212) are respectively mounted on the two clamping portions (2108), are disposed in a horizontal direction, and are spaced apart by a preset distance; and
the sliding member (30) is movably mounted on the guide rail (212) through a sliding bearing (302).

25. The on-board radar calibration device (700) according to claim 13, wherein
the beam assembly (20) comprises a level instrument (216) configured to detect whether the guide rail (212) is horizontally disposed.

26. An on-board radar calibration method, comprising:
providing a radar calibration plate, a middle portion of the radar calibration plate having a through hole;
calibrating a vertical plane of the radar calibration plate so that the radar calibration plate is perpendicular to a central axis plane of a to-be-calibrated automobile;
mounting a radar calibration reflector on a surface of an on-board radar;
providing a radar calibration laser so that a laser beam emitted by the radar calibration laser passes through the through hole, and adjusting a position of the radar calibration plate and a position of the radar calibration laser so that the laser beam emitted through the through hole is irradiated to the radar calibration reflector; and
adjusting the on-board radar or adjusting the position of the radar calibration plate until a laser spot reflected by the radar calibration reflector falls on a predetermined position on the radar calibration plate.

27. The on-board radar calibration method according to claim 26, wherein the calibrating a vertical plane of the radar calibration plate so that the radar calibration plate is perpendicular to a central axis plane of a to-be-calibrated automobile comprises:
providing a laser and a stop, the laser comprising a transmitting hole, and the stop being provided with a stop groove and being placed between the laser and the radar calibration plate;
enabling the laser so that the transmitting hole emits a laser beam;
adjusting the stop groove and the laser so that the laser beam emitted by the laser is parallel to the central axis plane of the to-be-calibrated automobile and passes through the stop groove after being emitted in a horizontal direction; and
adjusting the position of the radar calibration plate so that the laser beam is returned along an original path to be projected to the transmitting hole.
